# EUROPÄISCHE PATENTSCHRIFT

(11) **EP 2 798 231 B1**
(45) Veröffentlichungstag und Bekanntmachung des Hinweises auf die Patenterteilung: **20.06.2018**
(21) Anmeldenummer: 12778088.0
(22) Anmeldetag: 18.10.2012
(51) Int. Cl.: F16B 5/02, F16B 41/00, F16B 31/02

(54) **Abstandselement und Verfahren zur Vor- und Endmontage**
Spacer element and method for pre-assembly and final assembly
Espaceur et procédé de prémontage et de montage final

(30) Priorität: 28.12.2011 DE 102011090000
(43) Veröffentlichungstag der Anmeldung: 05.11.2014
(73) Patentinhaber: Federal-Mogul Sealing Systems Gmbh, 57562 Herdorf (DE)
(72) Erfinder: KROHM, Michael, 57584 Wallmenroth (DE); KRUS, Ralf, 51789 Lindlar (DE)
(74) Vertreter: Becker Kurig Straus
(86) Internationale Anmeldenummer: PCT/EP2012/070635
(87) Internationale Veröffentlichungsnummer: WO 2013/097960

(56) Entgegenhaltungen:
- DE-U1- 29 612 020
- US-A- 4 396 327
- US-A- 6 019 557
- US-A1- 2003 202 856
- US-A1- 2006 219 860

## Beschreibung

Die vorliegende Erfindung betrifft ein Abstandselement sowie zugehörige Verfahren zur Vor- und Endmontage, insbesondere ein Abstandselement gemäß dem Oberbegriff von Anspruch 1 (US6019557A).

### Stand der Technik

In der Automobilindustrie werden vorwiegend Wärme-Abschirmbleche eingesetzt, um die Aufgabe der Temperaturabschirmung zu erfüllen. Sie schützen Fahrzeugkomponenten gegen Hitze, die vom Motor, Katalysator, Schalldämpfer, vom Auspuffstrang oder von anderen heißen Komponenten ausgeht. Die zu schützenden Komponenten befinden sich vorwiegend im Motorraum oder im Unterboden. Dies sind beispielsweise Kunststoffteile, Elektronik oder flüssigkeitsgefüllte Leitungen im Motorraum, Kabel, Treibstofftank, Aufhängevorrichtungen der Abgasvorrichtung und Karosserieboden im Unterbodenbereich.

Wärme-Abschirmbleche werden seit langem in der Automobilindustrie eingesetzt. Sie können als einfache, einlagige Bleche, als isolierte Bleche oder im sogenannten Sandwichaufbau ausgeführt sein. Isolierte Bleche bestehen aus einem einlagigen Trägerblech, einer hitzebeständigen Isolationsschicht und einer Abdeckschicht.

Aus dem Patentdokument US6019557A ist eine Gewindehülse bekannt die aus einem Metallblech mit Nuten gerollt wurde. Aus dem Patentdokument DE29612020U1 ist eine Zylinderkopfhaube aus Kunststoff bekannt, die Vorrichtungen enthält, um bis zu einer Endmontage vormontierte Schrauben in Schraubenlöchern zu halten.

Herkömmliche Abschirmelemente werden oft über integrierte Distanzscheiben oder - Hülsen mit separaten Schrauben verschraubt. Hierzu werden die Distanzscheiben oder -Hülsen im Bereich der Befestigungslöcher fest mit dem Abschirmblech verbunden, etwa durch Bördeln oder Schweißen. Um die Abschirmung zu montieren werden separat Befestigungsschrauben zugeführt und durch Abschirmung und Distanzscheibe oder -Hülse mit dem Bauteil verschraubt.

Diese Vorgehensweise ist zum einem umständlich, da während der Endmontage viele Einzelteile zusammengefügt werden müssen. Außerdem bedarf der Vorgang der Bördelns, bzw. Schweißens der Distanzelemente Zeit, Material und Energie, was einen erheblichen Kostenfaktor darstellen kann.

### Zusammenfassung

Entsprechend stellt die vorliegende Erfindung ein vor- und endmontiertes Wärmeabschirmblech und ein Verfahren zu dessen vereinfachter Montage sowie ein dafür geeignetes Abstandselement mit den

Merkmalen des Anspruchs 1 bereit, wobei bevorzugte Ausführungen in den abhängigen Ansprüchen beschrieben sind.

Ein Abschirmblech mit integrierten Distanzscheiben oder -Hülsen, das mit den Befestigungsschrauben verliersicher verbunden ist, so dass die Befestigungsschrauben nicht separat zugeführt werden müssen, wird bereitgestellt.

Normalerweise werden Distanzelemente oder Abstandselemente in einem separaten Arbeitsgang durch z.B. Bördeln oder Schweißen fest im Bereich der Befestigungslöcher mit dem Abschirmblech verbunden und mit separat zugeführten Schrauben verschraubt.

Um diese Arbeitsgänge rationaler zu gestalten werden die Abstandsscheiben oder - Hülsen nicht mehr mit dem Abschirmblech fest verbunden. Die benötigten Hülsen oder Scheiben weisen an einem Ende ein Innengewinde mit ca. 1 bis 3 Gewindegängen auf. Der Innendurchmesser der Hülse in diesem Bereich kann 0,2mm bis 0,6mm kleiner sein als der Gewindeaussendurchmesser der zu verwendenden Befestigungsschraube. Der restliche Innendurchmesser der Scheibe/ Hülse soll 0,5 bis 1mm größer sein als der Aussendurchmesser der Befestigungsschraube. So ergibt sich eine Verschraubung im oberen Bereich von Hülse/Scheibe mit sehr viel Spiel zwischen den Gewindeflanken.

Das Spiel zwischen den Flanken sollte je nach verwendetem Schraubenaussendurchmesser so gewählt werden, dass eine Vormontage von Schraube, Abschirmung und Hülse/Scheibe mit geringen Drehmoment verliersicher bis zur Endmontage der Abschirmung möglich ist.

Bei der Endmontage der so vormontierten Abschirmung am Motor Bauteil wird die Befestigungsschraube mit höherem Drehmoment verschraubt. Hierdurch wird die Schraubverbindung im oberen Bereich der Hülse/Scheibe bedingt durch das hohe Flankenspiel wie eine Art Sollbruchstelle zerstört.

Folglich stellt die vorliegende Erfindung ein vor- und endmontiertes Wärmeabschirmblech und ein Verfahren zu dessen Montage bereit. Eine erste Ausführung betrifft ein vormontiertes Wärmeabschirmblech und umfasst dabei wenigstens eine Befestigungsschraube mit einem Außengewinde, das einen ersten Nenndurchmesser aufweist, und wenigstens einem Abstandselement, das weiter einen ersten Bereich mit einem Innengewinde, das einen zweiten Nenndurchmesser aufweist, und einen zweiten Bereich ohne Innengewinde, der an den ersten Bereich angrenzt und der einen Durchgangsinnendurchmesser aufweist, umfasst.

Dabei ist die erste Ausführung der vorliegenden Erfindung weiter dadurch gekennzeichnet, dass das Wärmeabschirmblech wenigstens ein Loch aufweist, durch das die wenigstens eine Befestigungsschraube mit dem wenigstens einen Abstandselement mit einem Vormontagedrehmoment verschraubt ist, das geringer ist als ein Sollbruchdrehmoment des Innengewindes des Abstandselements, wobei das Sollbruchdrehmoment des Innengewindes des Abstandselements geringer ist, als ein Endmontagedrehmoment.

Auf diese Art wird in der ersten Ausführung ein vormontiertes Wärmeabschirmblech bereitgestellt, wobei während der Vormontage die wenigstens eine Befestigungsschraube, das Wärmeabschirmblech und das wenigstens eine Abstandselement mit einem geringen Drehmoment verliersicher verschraubt werden, so dass das Sollbruchdrehmoment des Innengewindes des wenigstens einen Abstandelements nicht überschritten wird. Das so vormontierte System kann einfach und sicher zur Endmontage transportiert werden.

Eine zweite Ausführung der vorliegenden Erfindung betrifft ein endmontiertes Wärmeabschirmblech. Die zweite Ausführung entspricht dabei der obigen ersten Ausführung eines vormontierten Wärmeabschirmblechs mit dem Unterschied, dass das vormontierte Abschirmblech an einer abzuschirmenden Vorrichtung verschraubt ist. Die Abzuschirmende Vorrichtung kann dabei ein Wärme erzeugendes Bauteil eines Motors oder dergleichen sein oder selber von der Wärme eines benachbarten Bauteils geschützt werden. Außerdem zeichnet die zweite Ausführung der vorliegenden Erfindung weiter aus, dass das Wärmeabschirmblech wenigstens ein Loch aufweist, durch das die wenigstens eine Befestigungsschraube über das Abstandselement mit einer Bohrung mit Innengewinde der abzuschirmenden Vorrichtung mit einem Endmontagedrehmoment verschraubt ist. Das Endmontagedrehmoment ist dabei deutlich höher als ein Sollbruchdrehmoment des Innengewindes des Abstandselements.

Auf diese Art erlaubt die zweite Ausführung der vorliegenden Erfindung eine einfache und schnelle Endmontage des vormontierten Wärmeabschirmblechs der ersten Ausführung. Durch die Vormontage sind alle notwendigen Teile bereits verliersicher verbunden. Die Endmontage erfordert nur noch das Verschrauben des vormontierten Systems mit der abzuschirmenden Vorrichtung. Dieses Verschrauben erfolgt dabei mit einem höheren Endmontagedrehmoment, das das Sollbruchdrehmoment des Inngewindes des mindestens einen Abstandselements deutlich überschreitet. Das Sollbruchdrehmoment sollte dabei zwischen 1% und 7%, 5% und 13%, 10% und 18%, 15% und 25% oder 1% und 25% des Endmontagedrehmoments betragen. So kann das Innengewinde des wenigstens einen Abstandselements nicht mehr der vollen Funktion des Abstandselements im Wege stehen.

Die erste und die zweite Ausführung der vorliegenden Erfindung können weiter so gestaltet sein, dass der zweite Nenndurchmesser des wenigstens einen Abstandselements mindestens 0,2mm und maximal 0,6mm kleiner ist, als der erste Nenndurchmesser der wenigstens einen Befestigungsschraube. Auf diese Weise greift die Befestigungsschraube zwar in das Abstandselement, durch das hohe Spiel der Gewinde von Befestigungsschraube und Abstandselement kann die Verschraubung über ein hohes Drehmoment, das höher als das Sollbruchdrehmoment ist, gelöst werden.

Die erste und die zweite Ausführung der vorliegenden Erfindung können weiter so gestaltet sein, dass das Innengewinde des wenigstens einen Abstandselements mindestens einen Gewindegang, 1,5 Gewindegänge, zwei Gewindegänge, 2,5 Gewindegänge oder maximal drei Gewindegänge aufweist. Dadurch lässt sich ein gewünschtes Sollbruchdrehmoment einfach über die Gewindegangzahl des Innengewindes des wenigstens einen Abstandselements regulieren.

Die erste und die zweite Ausführung der vorliegenden Erfindung können weiter so gestaltet sein, dass der Durchgangsinnendurchmesser des zweiten Bereichs des wenigstens einen Abstandselements um mindestens 0,5mm und maximal 1mm größer ist als der erste Nenndurchmesser der wenigstens einen Befestigungsschraube. Dadurch hat die Schraube nach der Zerstörung des Innengewindes des wenigstens einen Abstandselements im Rahmen der Endmontage genug Spiel, um sicher mit der abzuschirmenden Vorrichtung verbunden zu werden. An dieser Stelle sei angemerkt, dass das Innengewinde des mindestens einen Anstandselements keineswegs bei der Endmontage zerstört werden muss. Vielmehr kann es auch vorkommen, dass sich das Abstandelement so bei der Endmontage dreht, dass das Gewinde der vollen Funktion des Anstandselements nicht im Wege steht und somit intakt bleibt oder nur teilweise zerstört wird. Dies soll die vorliegende Erfindung jedoch nicht in ihrem Umfang einschränken.

Ein anderer Aspekt der vorliegenden Erfindung ist es ein Verfahren zur Montage eines Wärmeabschirmblechs bereitzustellen. Das Verfahren zur Vormontage Wärmeabschirmblechs umfasst dabei das Verschrauben wenigstens einer Befestigungsschraube, eines Wärmeabschirmblechs und wenigstens eines Abstandselements mit einem Vormontagedrehmoment, das geringer ist als ein Sollbruchdrehmoment des Innengewindes des wenigstens einen Abstandelements und ausreicht, um die wenigstens eine Befestigungsschraube, das Wärmeabschirmblech und das wenigstens eine Abstandselement verliersicher zu verbinden, wobei das Sollbruchdrehmoment des Innengewindes des mindestens einen Abstandselements geringer ist als ein Endmontagedrehmoment.

Weiter wird ein Verfahren zur Endmontage eines Wärmeabschirmblechs gemäß der ersten Ausführung der vorliegenden Erfindung bereitgestellt. Das Verfahren zur Endmontage eines Wärmeabschirmblechs umfasst das Verschrauben der Kombination aus der wenigstens einen Befestigungsschraube, dem Wärmeabschirmblech, und dem wenigstens einen Abstandselement an der abzuschirmenden Vorrichtung mit einem Drehmoment, das größer ist als das Sollbruchdrehmoment des Innengewindes des wenigstens einen Abstandelements.

Die vorliegende Erfindung stellt ein Abstandselement bereit. Das Abstandselement ist geeignet in dem oben beschriebenen vor- oder endmontierten Wärmeabschirmblech und/oder dem dazu gehörigen Verfahren verwendet zu werden, jedoch nicht dadurch begrenzt. Das Abstandselement umfasst einen Hauptteil, der aus einem ersten Material besteht und eine Öffnung aufweist, und einen Nebenteil, der wenigstens einen Teil des Inneren der Öffnung des Hauptteils auskleidet und aus einem zweiten Material besteht, das weniger fest ist als das erste Material. Das zweite, weniger feste Material kann dabei ein Kunststoff, bzw. ein organisches Polymer, ein Metall oder eine Metalllegierung oder irgendein anderes geeignetes Material sein. Das Abstandselement umfasst außerdem ein Innengewinde das ebenfalls aus dem zweiten Material des Nebenteils besteht. Im Folgenden werden Ausführungen beschrieben, die eine gezielte Schwächung des Innengewindes des erfindungsgemäßen Abstandselements und somit eine genaue Einstellung des Sollbruchdrehmoments erlauben.

In einer zweiten Ausführung umfasst der Hauptteil des Abstandselements eine Kerbe oder Aussparung, die mit dem zweiten Material des Nebenteils gefüllt ist. Dies ermöglicht eine sicherere Verbindung von Haupt- und Nebenteil. Die Kerbe oder Aussparung selbst kann dabei wiederum Kerben oder dergleichen aufweisen, um das zweite Material noch fester mit dem Hauptteil zu verbinden.

Die Flanken des Innengewindes des Abstandselements sind gerundete oder gekürzte Flanken zur gezielten Schwächung des Innengewindes. Dies erlaubt eine genauere Einstellung des gewünschten Sollbruchdrehmoments. Zu diesem Zweck ist in einer dritten Ausführung des Abstandselements zusätzlich das Innengewinde des Nebenteils des Abstandselements nicht durchgängig und weist Aussparungen zwischen den Gewindesegmenten auf.

Zum besseren Verständnis der vorliegenden Erfindung ist unten eine detaillierte Beschreibung der begleitenden Zeichnungen beigefügt.

### Kurzbeschreibung der Zeichnungen

Fig. 1 ist eine schematische Darstellung eines vor- bzw. endmontierten Wärmeabschirmblechs der vorliegenden Erfindung.
Fig. 2a ist eine Draufsicht einer ersten Ausführung eines erfindungsgemäßen Abstandelements.
Fig. 2b ist eine Seitenansicht einer ersten Ausführung eines erfindungsgemäßen Abstandelements.
Fig. 3 ist eine Seitenansicht einer zweiten Ausführung eines erfindungsgemäßen Abstandelements.
Fig. 4 ist eine Draufsicht einer dritten Ausführung eines erfindungsgemäßen Abstandelements.
Fig. 5 ist eine Seitenansicht einer alternativen Ausführung eines erfindungsgemäßen Abstandelements.
Fig. 6 ist eine Seitenansicht einer anderen alternativen Ausführung eines erfindungsgemäßen Abstandelements.

### Detaillierte Beschreibung

Die vorliegende Erfindung betrifft ein Abstandselement 4,

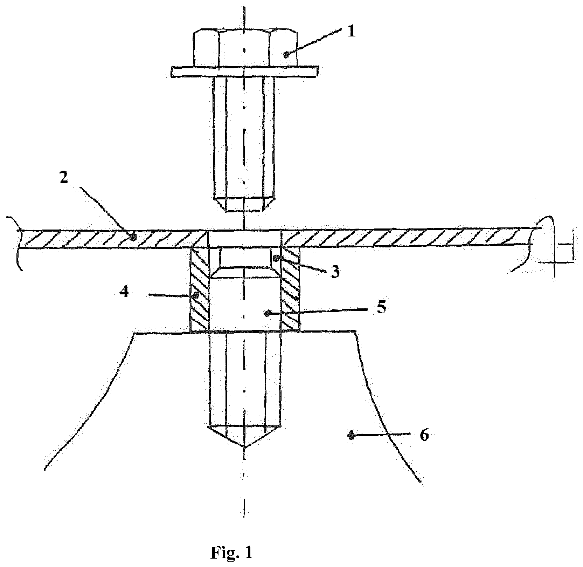

ein vor- und endmontiertes Wärmeabschirmblech 2 und ein Verfahren zu dessen Montage. Mit Bezug auf Fig. 1 betrifft eine erste Ausführung ein vormontiertes Wärmeabschirmblech 2 und umfasst dabei wenigstens eine Befestigungsschraube 1 mit einem Außengewinde, das einen ersten Nenndurchmesser aufweist, und wenigstens ein Abstandselement 4, das weiter einen ersten Bereich 3 mit einem Innengewinde, das einen zweiten Nenndurchmesser aufweist, und einen zweiten Bereich 5 ohne Innengewinde, der an den ersten Bereich 3 angrenzt und der einen Durchgangsinnendurchmesser aufweist, umfasst.
Dabei ist die erste Ausführung weiter dadurch gekennzeichnet, dass das Wärmeabschirmblech 2 wenigstens ein Loch aufweist, durch das die wenigstens eine Befestigungsschraube 1 mit dem wenigstens einen Abstandselement 4 mit einem Vormontagedrehmoment verschraubt ist, das geringer ist als ein Sollbruchdrehmoment des Innengewindes des Abstandselements 4, wobei das Sollbruchdrehmoment des Innengewindes des Abstandselements 4 geringer ist, als ein Endmontagedrehmoment.

Auf diese Art wird in der ersten Ausführung ein vormontiertes Wärmeabschirmblech 2 bereitgestellt, wobei während der Vormontage die wenigstens eine Befestigungsschraube 1, das Wärmeabschirmblech 2 und das wenigstens eine Abstandselement 4 mit einem ausreichenden Drehmoment verliersicher verschraubt werden, so dass das Sollbruchdrehmoment des Innengewindes des wenigstens einen Abstandelements nicht überschritten wird. Das so vormontierte System kann einfach und sicher zur Endmontage transportiert werden.

Mit Bezug auf Fig. 1 betrifft eine zweite Ausführung ein endmontiertes Wärmeabschirmblech 2. Die zweite Ausführung entspricht dabei der obigen ersten Ausführung eines vormontierten Wärmeabschirmblechs 2 mit dem Unterschied, dass das vormontierte Abschirmblech 2 der ersten Ausführung an einer abzuschirmenden Vorrichtung verschraubt ist. Die Abzuschirmende Vorrichtung 6 kann dabei ein Wärme erzeugendes Bauteil eines Motors oder dergleichen sein oder selber von der Wärme eines benachbarten Bauteils geschützt werden. Außerdem zeichnet die zweite Ausführung des endmontierten Wärmeabschirmblechs 2 weiter, ähnlich der ersten Ausführung, aus, dass das Wärmeabschirmblech 2 wenigstens ein Loch aufweist, durch das die wenigstens eine Befestigungsschraube 1 über das Abstandselement 4 mit einer Bohrung mit Innengewinde der abzuschirmenden Vorrichtung mit einem Endmontagedrehmoment verschraubt ist, das höher ist als ein Sollbruchdrehmoment des Innengewindes des Abstandselements 4.

Auf diese Art stellt die zweite Ausführung der vorliegenden Erfindung ein endmontiertes Wärmeabschirmblech 2 bereit, dass eine einfach und schnell montierbare Ausführung des vormontierten Wärmeabschirmblechs 2 der ersten Ausführung darstellt. Durch die Vormontage sind alle notwendigen Teile bereits verliersicher verbunden. Die Endmontage erfordert nur noch das Verschrauben des vormontierten Systems mit der abzuschirmenden Vorrichtung 6. Dieses Verschrauben erfolgt dabei mit einem höheren Endmontagedrehmoment, das das Sollbruchdrehmoment des Inngewindes des mindestens einen Abstandselements 4 überschreitet. So kann das Innengewinde des wenigstens einen Abstandselements 4 nicht mehr der vollen Funktion des Abstandselements 4 im Wege stehen.

Die erste und die zweite Ausführung der vorliegenden Erfindung sind weiter dadurch gekennzeichnet, dass der zweite Nenndurchmesser des wenigstens einen Abstandselements 4 mindestens 0,2mm und maximal 0,6mm kleiner ist, als der erste Nenndurchmesser der wenigstens einen Befestigungsschraube 1. Auf diese Weise greift die Befestigungsschraube 1 zwar in das Abstandselement 4, durch das hohe Spiel der Gewinde von Befestigungsschraube und Abstandselement 4 kann die Verschraubung über ein hohes Drehmoment, das höher als das Sollbruchdrehmoment ist, gelöst werden.

Die erste und die zweite Ausführung des Wärmeabschirmblechs 2 sind weiter dadurch gekennzeichnet, dass das Innengewinde des wenigstens einen Abstandselements 4 mindestens einen Gewindegang und maximal 3 Gewindegänge aufweist. Dadurch lässt sich ein gewünschtes Sollbruchdrehmoment einfach über die Gewindegangzahl des Innengewindes des wenigstens einen Abstandselements 4 regulieren.

Die erste und die zweite Ausführung des Wärmeabschirmblechs 2 sind weiter dadurch gekennzeichnet, dass der Durchgangsinnendurchmesser des zweiten Bereichs 5 des wenigstens einen Abstandselements 4 um mindestens 0,5mm und maximal 1mm größer ist als der erste Nenndurchmesser der wenigstens einen Befestigungsschraube 1. Dadurch hat die Schraube nach der Zerstörung des Innengewindes des wenigstens einen Abstandselements 4 im Rahmen der Endmontage genug Spiel, um sicher mit der abzuschirmenden Vorrichtung 6 verbunden zu werden.

Ein anderer Aspekt der vorliegenden Erfindung ist es ein Verfahren zur Vor- oder Endmontage eines Wärmeabschirmblechs 2 bereitzustellen. Das Verfahren zur Vormontage eines Befestigungssystems für ein Wärmeabschirmblech 2 umfasst dabei das Verschrauben wenigstens einer Befestigungsschraube (1) durch ein Loch eines Wärmeabschirmblechs (2) mit wenigstens einem Abstandselement (4), das ein Innengewinde aufweist, mit einem Vormontagedrehmoment. Das Vormontagedrehmoment ist dabei geringer als ein Sollbruchdrehmoment des Innengewindes des wenigstens einen Abstandelements (4) und reicht aus, um die wenigstens eine Befestigungsschraube (1), das Wärmeabschirmblech (2) und das wenigstens eine Abstandselement (4) verliersicher zu verbinden. Das Sollbruchdrehmoment des Innengewindes des mindestens einen Abstandselements (4) ist jedoch geringer ist als ein Endmontagedrehmoment.

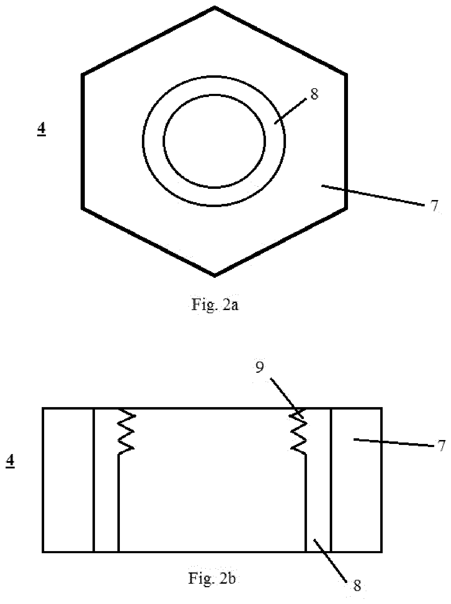

Die vorliegende Erfindung stellt ein Abstandselement 4 bereit. Das Abstandselement 4 ist geeignet in dem oben beschriebenen vor- oder endmontierten Wärmeabschirmblech 2 und/oder dem dazu gehörigen Verfahren verwendet zu werden, ist jedoch nicht dadurch begrenzt. Mit Bezug auf Fig. 2a und 2b umfasst das Abstandselement einer ersten Ausführung einen Hauptteil 7, der aus einem ersten Material besteht und eine Öffnung aufweist, und einen Nebenteil 8, der wenigstens einen Teil des Inneren der Öffnung des Hauptteils 7 auskleidet und aus einem zweiten Material besteht, das weicher ist als das erste Material. Das zweite, weichere Material kann dabei ein Kunststoff, bzw. ein organisches Polymer oder ein Metall oder eine Metalllegierung sein. Das Abstandselement umfasst außerdem ein Innengewinde 9 das aus dem zweiten Material des Nebenteils besteht.

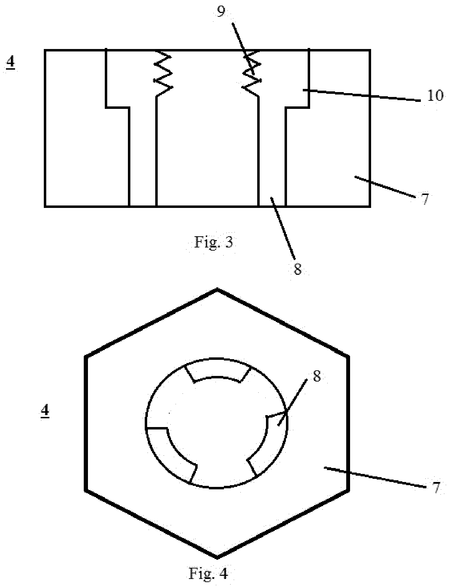

Mit Bezug auf Fig. 3 umfasst, in einer zweiten Ausführung des Abstandselements 4, der Hauptteil 7 eine Kerbe oder Aussparung 10, die mit dem zweiten Material des Nebenteils 8 gefüllt ist. Dies ermöglicht eine sicherere Verbindung von Haupt- und Nebenteil, 7, 8. Die Kerbe oder Aussparung 10 selbst kann dabei wiederum Kerben oder dergleichen (nicht gezeigt) aufweisen, um das zweite Material noch fester mit dem Hauptteil 7 zu verbinden.

Mit Bezug auf Fig. 4 ist, in einer dritten Ausführung des Abstandselements 4, das Innengewinde 9 des Nebenteils 8 des Abstandselements 4 nicht durchgängig und weist Aussparungen zwischen den einzelnen Gewindesegmenten auf. Das hat zur Folge, dass das Gewinde weiter geschwächt wird und somit das Sollbruchdrehmoment des Innengewindes 9 weiter gesenkt und/oder genauer eingestellt werden kann. Es sei außerdem angemerkt, dass die Grundform der in Fig. 2a und Fig. 4 gezeigten Ausführungen des Abstandselements 4 nicht auf die dargestellte sechseckige Form beschränkt ist. Neben runden oder quadratischen Abstandselementen ist auch jede andere gängige Grundform für Abstandselemente möglich.

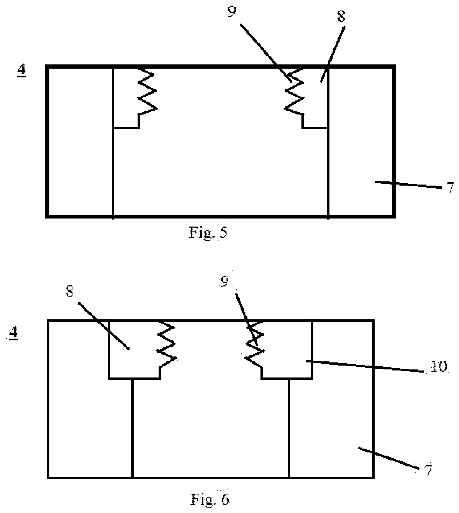

Fig. 5 und Fig. 6 zeigen alternative Ausführungen des Abstandselements 4, bei denen das Nebenteil 8 aus dem zweiten Material nicht die gesamte Öffnung des Hauptteils 7 ummantelt. Des Weiteren sei angemerkt das die oben beschriebenen Ausführungen des Abstandselements 4 beliebig untereinander kombinierbar sind. So ist etwa ein Abstandselement 4 mit dem unterbrochenen Gewinde der dritten Ausführung aus Fig. 4 und einer Kerbe bzw. Aussparung, wie in Fig. 6 gezeigt, denkbar. Die einzelnen Kombinationsmöglichkeiten der Ausführungen des Abstandselements 4 der Figuren 2a bis 6 sind hier nicht weiter ausgeführt.

## Patentansprüche

1. Abstandselement (4), umfassend:
einen Hauptteil (7), der aus einem ersten Material besteht und eine Öffnung aufweist; und
einen Nebenteil (8), der wenigstens einen Teil des Inneren der Öffnung des Hauptteils (7) auskleidet und ein zweites Material umfasst, das weniger fest ist als das erste Material,
wobei der Nebenteil (8) ein Innengewinde (9) aufweist, **dadurch gekennzeichnet, dass** Flanken des Innengewindes zur gezielten Schwächung des Innengewindes des Abstandselements (4) gerundete Flanken oder gekürzte Flanken sind.

2. Abstandselement (4) gemäß Anspruch 1, wobei der Hauptteil (7) eine Kerbe oder Aussparung (10) aufweist, die mit dem zweiten Material des Nebenteils (8) gefüllt ist.

3. Abstandselement (4) gemäß Anspruch 1 oder 2, wobei das Innengewinde (9) des Nebenteils (8) nicht durchgängig ist und Aussparungen zwischen einzelnen Gewindesegmenten aufweist.

4. Abstandselement (4) gemäß einem der Ansprüche 1 bis 3, wobei das zweite Material ein Kunststoff ist.

5. Abstandselement (4) gemäß einem der Ansprüche 1 bis 4, wobei das zweite Material ein Metall ist.

6. Vormontiertes Wärmeabschirmblech (2), umfassend:
wenigstens eine Befestigungsschraube (1) mit einem Außengewinde, das einen ersten Nenndurchmesser aufweist; und
wenigstens ein Abstandselement (4) gemäß einem der Ansprüche 1 bis 5,
wobei das Wärmeabschirmblech (2) wenigstens ein Loch aufweist, durch das die wenigstens eine Befestigungsschraube (1) mit dem wenigstens einen Abstandselement (4) mit einem Vormontagedrehmoment verschraubt ist, das geringer ist als ein Sollbruchdrehmoment des gezielt geschwächten Innengewindes des Abstandselements (4), und wobei das Sollbruchdrehmoment des gezielt geschwächten Innengewindes des Abstandselements (4) geringer ist, als ein Endmontagedrehmoment.

7. Endmontiertes Wärmeabschirmblechs (2), umfassend:
wenigstens eine Befestigungsschraube (1) mit einem Außengewinde, das einen ersten Nenndurchmesser aufweist;
wenigstens ein Abstandselement (4) gemäß einem der Ansprüche 1 bis 5 und eine abzuschirmende Vorrichtung (6),
wobei das Wärmeabschirmblech (2) wenigstens ein Loch aufweist, durch das die wenigstens eine Befestigungsschraube (1) über das Abstandselement (4) mit einer Bohrung mit Innengewinde der abzuschirmenden Vorrichtung mit einem Endmontagedrehmoment verschraubt ist, das höher ist als ein Sollbruchdrehmoment des gezielt geschwächten Innengewindes des Abstandselements (4).

8. Verfahren zur Vormontage eines Wärmeabschirmblechs (2), mindestens umfassend: Verschrauben wenigstens einer Befestigungsschraube (1) durch ein Loch eines Wärmeabschirmblechs (2) mit wenigstens einem Abstandselement (4), wobei das Abstandselement (4) gemäß einem der Ansprüche 1 bis 5 ausgeführt ist, mit einem Vormontagedrehmoment, das geringer ist als ein Sollbruchdrehmoment des gezielt geschwächten Innengewindes des wenigstens einen Abstandelements (4) und ausreicht, um die wenigstens eine Befestigungsschraube (1), das Wärmeabschirmblech (2) und das wenigstens eine Abstandselement (4) verliersicher zu verbinden, wobei das Sollbruchdrehmoment des gezielt geschwächten Innengewindes des mindestens einen Abstandselements (4) geringer ist als ein Endmontagedrehmoment.

9. Verfahren zur Endmontage eines vormontierten Wärmeabschirmblechs (2) gemäß Anspruch 6, mindestens umfassend:
Verschrauben der Kombination aus wenigstens einer Befestigungsschraube (1), Wärmeabschirmblech (2), und wenigstens einem Abstandselement (4) an einer abzuschirmenden Vorrichtung (6) mit einem Endmontagedrehmoment, das größer ist als das Sollbruchdrehmoment des gezielt geschwächten Innengewindes des wenigstens einen Abstandelements (4) gemäß einem der Ansprüche 1 bis 5.

## Claims

1. A spacer element (4), comprising:
a main part (7) which consists of a first material and has an opening; and
a secondary part (8) which lines at least a part of the interior of the opening in the main part (7) and comprises a second material which is less strong than the first material,
the secondary part (8) having an internal thread (9), **characterised in that** flanks of the internal thread are rounded flanks or shortened flanks for the deliberate weakening of the internal thread of the spacer element (4).

2. The spacer element (4) according to Claim 1, wherein the main part (7) has a notch or cut-out (10) which is filled with the second material of the secondary part (8) .

3. The spacer element (4) according to Claim 1 or 2, wherein the internal thread (9) of the secondary part (8) is not continuous and has cut-outs between individual thread segments.

4. The spacer element (4) according to any one of Claims 1 to 3, wherein the second material is a plastic.

5. The spacer element (4) according to any one of Claims 1 to 4, wherein the second material is a metal.

6. A preassembled heat shield plate (2), comprising:
at least one mounting bolt (1) with an external thread which has a first nominal diameter; and
at least one spacer element (4) according to any one of Claims 1 to 5,
wherein the heat shield plate (2) has at least one hole through which the at least one mounting bolt (1) is bolted to the at least one spacer element (4) using a preassembly torque which is lower than a predetermined breaking torque of the deliberately weakened internal thread of the spacer element (4), and wherein the predetermined breaking torque of the deliberately weakened internal thread of the spacer element (4) is lower than a final assembly torque.

7. A finally assembled heat shield plate (2), comprising:
at least one mounting bolt (1) with an external thread which has a first nominal diameter;
at least one spacer element (4) according to any one of Claims 1 to 5 and a device (6) to be shielded,
wherein the heat shield plate (2) has at least one hole through which the at least one mounting bolt (1) is bolted via the spacer element (4) to a bore with an internal thread in the device to be shielded using a final assembly torque which is greater than a predetermined breaking torque of the deliberately weakened internal thread of the spacer element (4).

8. A method for preassembling a heat shield plate (2), at least comprising:
bolting at least one mounting bolt (1) through a hole in a heat shield plate (2) to at least one spacer element (4), the spacer element (4) being designed according to any one of Claims 1 to 5, using a preassembly torque which is lower than a predetermined breaking torque of the deliberately weakened internal thread of the at least one spacer element (4) and is sufficient to connect the at least one mounting bolt (1), the heat shield plate (2) and the at least one spacer element (4) securely, wherein the predetermined breaking torque of the deliberately weakened internal thread of the at least one spacer element (4) is lower than a final assembly torque.

9. A method for finally assembling a preassembled heat shield plate (2) according to Claim 6, at least comprising:
bolting the combination of at least one mounting bolt (1), the heat shield plate (2) and at least one spacer element (4) to a device (6) to be shielded using a final assembly torque which is greater than the predetermined breaking torque of the deliberately weakened internal thread of the at least one spacer element (4) according to any one of Claims 1 to 5.

## Revendications

1. Espaceur (4), comprenant :
une pièce principale (7), qui est constituée d'une première matière et qui comporte un orifice ; et
une pièce auxiliaire (8) qui garnit au moins une partie de l'intérieur de l'orifice de la pièce principale (7) et qui comprend une deuxième matière qui est moins résistante que la première matière,
la pièce auxiliaire (8) comportant un taraudage (9), **caractérisé en ce que** pour l'affaiblissement ciblé du taraudage de l'espaceur (4), des flancs du taraudage sont des flancs arrondis ou des flancs raccourcis.

2. Espaceur (4) selon la revendication 1, la pièce principale (7) comportant une encoche ou un évidement (10) qui est rempli (e) de la deuxième matière de la pièce auxiliaire (8).

3. Espaceur (4) selon la revendication 1 ou 2, le taraudage (9) de la pièce auxiliaire (8) n'étant pas traversant et comportant des évidements entre des segments individuel de taraudage.

4. Espaceur (4) selon l'une quelconque des revendications 1 à 3, la deuxième matière étant une matière plastique.

5. Espaceur (4) selon l'une quelconque des revendications 1 à 4, la deuxième matière étant un métal.

6. Tôle thermo-isolante (2) prémontée, comprenant :
au moins une vis de fixation (1) dotée d'un filetage, qui présente un premier diamètre nominal ; et
au moins un espaceur (4) selon l'une quelconque des revendications 1 à 5,
la tôle thermo-isolante (2) comportant au moins un trou à travers lequel l'au moins une vis de fixation (1) est vissée avec l'au moins un espaceur (4) avec un couple de serrage de prémontage qui est inférieur à un couple de serrage de rupture théorique du taraudage à affaiblissement ciblé de l'espaceur (4), et le couple de serrage de rupture théorique du taraudage à affaiblissement ciblé de l'espaceur (4) étant inférieur à un couple de serrage pour le montage final.

7. Tôle thermo-isolante (2) complètement montée, comprenant :
au moins une vis de fixation (1) avec un filetage, qui présente un premier diamètre nominal ;
au moins un espaceur (4) selon l'une quelconque des revendications 1 à 5 et un dispositif (6) qui doit être isolé,
la tôle thermo-isolante (2) comportant au moins un trou à travers lequel l'au moins une vis de fixation (1) est vissée par l'intermédiaire de l'espaceur (4) avec un perçage doté d'un taraudage du dispositif qui doit être isolé avec un couple de serrage pour le montage final qui est supérieur à un couple de serrage de rupture théorique du taraudage à affaiblissement ciblé de l'espaceur (4).

8. Procédé de prémontage d'une tôle thermo-isolante (2), comportant au moins :
le vissage d'au moins une vis de fixation (1) à travers un trou d'une tôle thermo-isolante (2) avec au moins un espaceur (4), l'espaceur (4) étant réalisé selon l'une quelconque des revendications 1 à 5 avec un couple de serrage de prémontage qui est inférieur à un couple de serrage de rupture théorique du taraudage à affaiblissement ciblé de l'au moins un espaceur (4) et qui est suffisant pour l'assemblage imperdable de l'au moins une vis de fixation (1), de la tôle thermo-isolante (2) et de l'au moins un espaceur (4), le couple de serrage de rupture théorique du taraudage à affaiblissement ciblé de l'au moins un espaceur (4) étant inférieur à un couple de serrage pour le montage final.

9. Procédé de montage final d'une tôle thermo-isolante (2) prémontée selon la revendication 6, comprenant au moins :
le vissage de l'association d'au moins une vis de fixation (1), d'une tôle thermo-isolante (2) et d'au moins un espaceur (4) sur un dispositif (6) qui doit être isolé, avec un couple de serrage pour le montage final qui est supérieur au couple de serrage de rupture théorique du taraudage à affaiblissement ciblé de l'au moins un écarteur (4) selon l'une quelconque des revendications 1 bis 5.
